**Europäisches Patentamt**

**European Patent Office**

**Office européen des brevets**

(19)

(11) Veröffentlichungsnummer : **0 179 285 B2**

# (12) NEUE EUROPÄISCHE PATENTSCHRIFT

(45) Veröffentlichungstag der neuen Patentschrift :
**22.01.92 Patentblatt 92/04**

(51) Int. Cl.$^5$ : **G01F 1/58**

(21) Anmeldenummer : **85111990.9**

(22) Anmeldetag : **21.09.85**

(54) **Magnetisch-induktiver Durchflussmesser.**

(30) Priorität : **29.09.84 DE 3435910**
**07.08.85 DE 3528243**

(43) Veröffentlichungstag der Anmeldung :
**30.04.86 Patentblatt 86/18**

(45) Bekanntmachung des Hinweises auf die
Patenterteilung :
**11.05.88 Patentblatt 88/19**

(45) Bekanntmachung des Hinweises auf die
Entscheidung über den Einspruch :
**22.01.92 Patentblatt 92/04**

(84) Benannte Vertragsstaaten :
**AT BE CH DE FR GB IT LI LU NL SE**

(56) Entgegenhaltungen :
**DE-A- 1 698 038**
**DE-A- 2 008 044**
**DE-A- 2 410 407**

(56) Entgegenhaltungen :
**DE-B- 1 218 748**
**DE-B- 2 454 469**
**DE-C- 1 573 006**
**DE-C- 2 626 538**
**US-A- 3 372 589**
**US-A- 3 863 172**
**US-A- 3 902 366**
**US-A- 4 098 118**

(73) Patentinhaber : **Josef Heinrichs**
**Messgerätebau GmbH & Co. KG**
**Stolbergerstrasse 393**
**W-5000 Köln 41 (DE)**

(72) Erfinder : **Buschmann, Heinz**
**Widderstrasse 28**
**W-5020 Frechen 4 (DE)**

(74) Vertreter : **Langmaack, Jürgen, Dipl.-Ing. et al**
**Patentanwälte Maxton . Maxton . Langmaack**
**Goltsteinstrasse 93 Postfach 51 08 06**
**W-5000 Köln 51 (DE)**

## Beschreibung

Die Erfindung betrifft einen magnetisch-induktiven Durchflussmesser mit zwei Elektromagneten zur Erzeugungn eines magnetischen Feldes, das ein in einem Rohr strömendes elektrischleitfähiges Medium in einer Querschnittsebene durchsetzt und in dem in der Querschnittsebenenur zwei Messelektroden angeordnet sind, die an die Eingänge eines Differenzverstärkers als Teil einer Messumformerschaltung angeschlossen und die an etwa einander gegenüberliegenden Seiten des Rohres angeordnet sind.

Derartige magnetisch-induktive Durchflussmesser, wie sie in ihrem Grundaufbau beispielsweise aus der DE-B-2 454 469 bekannt sind, arbeiten in der Weise, dass auf der Aussenseite am Strömungskanal an gegenüberliegenden Seiten starke Elektromagnete angeordnet sind, deren magnetisches Feld die Querschnittsebene des Strömungskanals durchsetzt. Um 90 Grad versetzt hierzu sind im Inneren des Strömungskanals Messelektroden angeordnet, die entweder als Kontaktelektroden ausgebildet sind, d.h. auf der Innenseite der Isolierabdeckung liegen und mit dem zu messenden Medium in Berührung stehen, oder aber, wie in der DE-B-2 454 469 gezeigt, als kapazitiv wirkende Messelektroden ausgebildet sind, die in die Isolierabdeckung der Kanalinnenwandung eingebettet sind.

Durchflussmesser dieser Bauart zeigen bei grösseren Rohrdurchmessern, beispielsweise ab Nennweiten von 200 mm erhebliche Probleme sowohl hinsichtlich der Anordnung und Auslegung der am Strömungskanal anzubringenden Elektromagneten zur Erzeugung des magnetischen Feldes als auch hinsichtlich der elektrisch-isolierenden Auskleidung der Kanalinnenwandung. Aber auch für die Messung von geringen Durchflussmengen mit Durchmessern für den Strömungskanal von weniger als 20 mm ergeben sich ebenfalls erhebliche konstruktive, herstellungstechnische und messtechnische Probleme hinsichtlich Aufbau und Anordnung der einzelnen Elemente. Ein besonderes Problem stellt hierbei die Herstellung des Strömungskanals im Bereich der Messstelle dar, da dieser bisher nur in sehr aufwendigen Verfahren mit Hilfe von Räumnadeln hergestellt werden konnte, weil gerade Strömungskanäle in dieser Grössenordnung einen rechteckigen oder quadratischen Querschnitt aufweisen sollten, um überhaupt zu günstigen Abmessungen der Kontaktflächen zu kommen.

In der DE-U-1 944 979 ist nun ein Strömungsmesser beschrieben, mit dem man versucht hat, die vorstehend aufgeführten Schwierigkeiten dadurch zu beseitigen,dass man ein inhomogenes Magnetfeld mit den beiden Messelektroden zu einer Einsteckeinheit zusammengefasst hat, die seitlich in die Rohrleitung einsteckbar ist, in der das zu messende Medium fliesst. Die Anordnung ist hierbei so getroffen, dass eine Messelektrode mittig zwischen den beiden dem strömenden Medium zugekehrten Polen des Magneten angeordnet ist, während die zweite Messelektrode - bezogen auf die von den beiden Magnetpolen definierte Ebene - seitlich neben dem Magneten angeordnet ist. Der Nachteil dieser Anordnung besteht darin, dass selbst bei grossen Abmessungen dieser Einsteckeinheit nur weniger als die Hälfte des erzeugen Magnetfeldes, nämlich der zwischen den beiden Messelektroden verlaufende Teil des Magnetfeldes überhaupt für den Messvorgang wirksam ist. Darüber hinaus liegt ein erheblicher Bereich des für die Messung wirksamen Magnetfeldes in der Randzone des Strömungskanals, die in einer Grössenanordnung von etwa 3% des Kanalradius wegen der Störungseinflüsse durch die Randreibung praktisch keinen Beitrag für die Messanzeige leistet. Der Wirkungsgrad der vorbekannten Messanordnung und damit die Leistungsfähigkeit des vorbekannten Durchflussmessers ist somit so reduziert, dass gerade für den vorgesehenen Einsatzfall bei grossen Rohrdurchmessern keine zuverlässigen Messergebnisse erzielbar sind. Eine fabrikmässige Eichung des vorbekannten Durchflussmessers ist nicht möglich, da die in starkem Masse das Messergebnis beeinflussenden Strömungsverhältnisse im Randbereich auf den Prüfstand, insbesondere bei Durchflussmessein für grosse Rohrdurchmesser, praktisch nicht simulierbar sind, da nicht alle Störungseinflüsse, die sich in den Unregelmässigkeiten der Strömungsverhältnisse im Randbereich niederschlagen, simulierbar sind. Auch die Anordnung von zwei oder mehreren dieser Durchflussmesser, die in sich geschlossene Systeme darstellen, bringen keine Verbesserung, da bei dem vorbekannten System wesentliche Teile des die Durchflussmenge bestimmenden Strömungsquerschnittes gar nicht messtechnisch erfasst werden.

In DE-C-2 626 538 wird ein Durchflußmesser beschrieben, der nur einen Elektromagneten aufweist, wobei das Meßrohr zwischen den beiden Polen des einzigen Elektromagneten angeordnet wird. Außerdem ist dort das gesamte Meßrohr von innen isoliert.

Der Erfindung liegt die Aufgabe zugrunde, einen magnetisch-induktiven Durchflussmesser der eingangs bezeichneten Art zu schaffen, der unter Beibehaltung der Vorteile der Messung und Signalauswertung die Nachteile hinsichtlich Montage und Wartung beseitigt.

Diese Aufgabe wird bei einer Einrichtung der eingangs genannten Art gemäss der Erfindung dadurch gelöst, dass jeder Elektromagnet mit seinen beiden, mit einer elektrisch isolierenden Abdeckung versehenen Polen dem strömenden Medium zugekehrt ist und jeweils eine Messelektrode mittig zwischen den beiden Polen des jeweilsgen Elekromagneten angeordnet ist und sein Magnetfeld den Wertigkeitsbereich dieser Messelektrode deckt.

Überraschend hat sich nun gezeigt, dass durch die Zusammenfassung einer Messelektrode mit dem Elektromagneten zu einem ein kompaktes Bauteil bildenden Durchflusssensor und die Anordnung von zwei derartigen Durchflusssensoren, die in üblicher Weise in einer Messumformerschaltung verschaltet sind, in einfacher Weise magnetisch-induktive Durchflussmesser mit grosser Messleistung für praktisch beliebige Kanaldurchmesser erstellt werden können. Da jeder Durchflusssensor in einer geschlossenen Baueinheit alle Funktionsteile, nämlich den Elektromagneten zur Erzeugung des Magnetfeldes und die Messelektrode sowie die elektrisch isolierende Abdeckung im Bereich der Messelektrode als geschlossene Baukomponente in sich vereinigt, ergeben sich erhebliche Vorteile hinsichtlich Konstruktion und Einsatz des magnetisch-induktiven Messprinzips. Durchflusssensoren der erfindungsgemässen Art können selbst für Magnetfelder grosser Leistungen noch als kompakte Baueinheiten serienmässig gefertigt und fabrikmässig geeicht werden. Der Messkreis wird nur noch durch die beiden Durchflusssensoren mit ihrer Messumformerschaltung gebildet, während der zugehörige Kanalteil nur noch hinsichtlich seines Strömungsquerschnittes und als Halter der Durchflusssensoren Bedeutung hat. Deshalb entfallen die aufwendigen, jeweils auf der Aussenseite des Strömungskanals anzubringenden Magnetwicklungen mit den bisher je nach Einsatzfall komplizierten und aufwendigen Zusatz- und Kompensationswicklungen, die es bisher notwendig machten, in der Prüfung und Eichung des Durchflussmessers immer das entsprechende Kanal- bzw. Rohrstück mit einzubeziehen. Da der Durchflusssensor an seinem der zu messenden Strömung zugekehrten Ende, also in seinem Wirkbereich mit einer isolierenden Abdeckung versehen ist, entfällt ferner die Notwendigkeit, die Kanalwandung im Wirkbereich vollständig mit einer grossflächigen elektrisch isolierenden Auskleidung zu versehen. Dies bietet daher die Möglichkeit, für die Abdeckung Werkstoffe auszuwählen, die sowohl im Hinblick auf ihre elektrisch isolierende Eigenschaft als auch im Hinblick auf ihre Widerstandsfähigkeit gegenüber Korrosion und Abrasion durch das strömende Medium optimal sind, so dass auch hier teure Werkstoffe eingesetzt werden können, da nur der Halter selbst mit einer solchen Abdeckung versehen werden muss. Je nach Einsatzfall können hier Kunststoffe oder auch hochwertige Keramikstoffe, ggf. in Verbundkonstruktion eingesetzt werden. Ein weiterer baulicher Vorteil ist dadurch gegeben, dass durch den Einsatz von Durchflusssensoren ein magnetisch-induktiver Durchflussmesser praktisch an jeder beliebigen Stelle eines Strömungskanals angeordnet werden kann, da am Kanal an der betreffenden Stelle lediglich eine Einführungsöffnung in Form eines Haltestutzens oder dgl. angeordnet zu werden braucht. Ein besonderer Vorteil des erfindungsgemässen Durchflusssensors liegt ferner darin, dass im Messbereich ein starkes und weit in den Strömungskanal hineinreichendes Magnetfeld erzeugt werden kann. Dies bietet bei entsprechender Auslegung die Möglichkeit, für Flüssigkeiten mir geringer elektrischer Leitfähgkeit und/oder auch für geringe Strömungsgeschwindigkeiten noch zuverlässige Messsignale zu erzeugen. Durch die erfindungsgemässe Zuordnung der Messelektrode zu den Polflächen ergibt sich ferner der Vorteil, dass auch bei Strömungskanalwandungen aus ferromagnetischem Material das Magnetfeld nicht gestört wird und dadurch die Messgenauigkeit nicht beeinträchtigt wird.

Die beiden Durchflusssensoren werden so an die Stromversorgungseinrichtung angeschlossen, dass die Richtung ihrer den Strömungskanal in der Querschnittsebene durchsetzenden Feldlinien jeweils gleichgerichtet sind und dass die Messleitungen von den Messelektroden beider Durchflusssensoren in an sich bekannter Weise mit einem das Messsignal erzeugenden Messumformer verbunden sind. Für die Herstellung eines magnetisch-induktiver Durchflussmessers der erfindungsgemässen Bauart werden zwei in ihrer Leistung auf den Kanalquerschnitt ausgelegte Durchflusssensoren und die zugehörige, übliche Messumformerschaltung benötigt, die u.a. einen Differenzverstärker aufweist, auf den die Messelektrode jedes Durchflusssensors aufgeschaltet ist. Jeder Durchflussmesser erzeugt eine Messspannung, so dass der aus beiden gebildete Mittelwert als Messwert zur Verfügung steht. Da jeder Durchflusssensor als Serienteil herstellbar und eichfähig ist, ist somit auch für den magnetisch-induktiven Durchflussmesser der erfindungsgemässen Bauart die Gewähr für reproduzierbare Messwerte gegeben, wenn derartige Durchflusssensoren in der bisher üblichen Form als Durchflussmesser zusammengeschaltet werden. Während bei Durchflussmessern der herkömmlichen Bauart der den Durchflussmesser bildende Rohrschuss vollständig ausgewechselt werden musste, besteht bei einem Durchflussmesser der erfindungsgemässen Bauart der Vorteil, dass hier ohne Montage an der Leitung lediglich der defekte oder aber auch beide Durchflusssensoren ausgewechselt zu werden brauchen.

In Ausgestaltung der Erfindung ist vorgesehen, dass die Messelektrode als Kontaktelektrode auf der Aussenfläche der Isolierabdeckung angeordnet ist. Bei der gegebenen Anordnung von nur zwei Polflächen des Elektromagneten ergibt sich die Möglichkeit, verhältnismässig grossflächige Kontaktelektroden, d.h. Messelektroden einzusetzen, die mit dem strömenden Medium unmittelbar in Berührung stehen. Bei entsprechend grosser Kontaktfläche wird der Einfluss von Störspannungen, die in der Kontaktschicht zwischen Kontaktfläche und Medium aufgrund von Ablagerungen hervorgerufener elektrochemischer Vorgänge auftreten können, reduziert, da über den grössten Teil der Fläche die durch das strömende Medium hervorgerufene Spannung wirksam ist.

In einer anderen Ausgestaltung der Erfindung ist vorgesehen, dass die Messelektrode in der Isolierabdeckung von dem strömenden Medium galvanisch getrennt angeordnet ist. Auch hier bietet die erfindungsgemässe Anordnung durch die Zusammenfassung von Elektromagnet und Messelektrode mit einer nur auf den Endbereich des Halters begrenzten Isolierabdeckung die Möglichkeit, für eine derartige kapazitiv wirkende Messelektrode eine optimale Materialpaarung für die das Dielektrikum bildende Isolierabdeckung und die Messelektrode zu wählen und hierbei wegen der Möglichkeit einer maschinellen Herstellung eine hohe Präzision einzuhalten. Ein weiterer Vorteil ergibt sich auch für diese Ausgestaltung in der Tatsache, dass zwischen den beiden Polflächen eine verhältnismässig grosse Elektrodenfläche angeordnet werden kann, wobei auch hier wieder durch die exakte Zuordnung zwischen Elektrodenfläche und den Polflächen des Elektromagneten eindeutige Verhältnisse gegeben sind. Hierbei ist es in weiterer Ausgestaltung zweckmässig, wenn der Elektrode auf ihrer dem strömenden Medium abgekehrten Seite eine Schirmelektrode zugeordnet ist, so dass die Messelektrode gegenüber äusseren Störeinflüssen abgeschirmt ist.

Eine besonders vorteilhafte und für die Genauigkeit der Anzeige wesentliche Ausgestaltung ist dann gegeben, wenn die Verbindungsleitung zwischen der Messelektrode und dem nachgeschalteten Messumformer im Bereich des Halters mittig und somit durch eine neutrale Phase des Magneten geführt werden kann und dementsprechend aus dem ständigen Wechsel des Magnetfeldes keine nachteiligen Einflüsse für die Magnetanzeige auftreten können.

Ausgehend von der vorstehend in verschiedenen Ausgestaltungen wiedergegebenen Grundidee, jeder der beiden erforderlichen Messelektroden ein « eigenes Magnetfeld » zuzuordnen und somit Messelektrode und Magnet als Durchflusssensor zu einer Baueinheit zusammenzufassen, bietet nun die Erfindung auch die Möglichkeit, einen magnetisch-induktiven Durchflussmesser der eingangs bezeichneten Art zu schaffen, der auch für kleine Kanalquerschnitte zu vertretbaren Kosten herstellbar ist und einwandfreie Messungen ermöglicht.

In weiterer Ausgestaltung der Erfindung ist daher vorgesehen, dass jeweils die Polschuhe des Elektromagneten und die Messelektrode zumindest in ihrem dem zu messenden Medium zugekehrten Bereich in einem Tragkörper aus elektrisch nicht leitendem Material eingebettet sind und einen Durchflusssensor bilden, dass wenigstens die dem strömenden Medium zugekehrte Stirnseite des Tragkörpers, der mit einem Elektromagneten versehen ist, eine rinnenförmige Ausnehmung aufweist, die parallel zwischen den Polschuhen des Elektromagneten verläuft und in deren Grund die Messelektrode liegt und dass ein zweiter Tragkörper diametral gegenüber angeordnet ist und dass beide Tragkörper im Bereich der rinnenförmigen Ausnehmungen zumindest einen wesentlichen Teil des Wandungsumfanges des Messkanals bilden. Der Vorteil dieser Anordnung besteht darin, dass nunmehr die bisher übliche aufwendige Herstellung des Messkanals entfallen kann, da der Messkanal im wesentlichen durch die rinnenförmigen Ausnehmungen der mit ihren Stirnseiten gegeneinander gesetzten Tragkörper der beiden Durchflusssensoren gebildet wird. Im einfachsten Fall wird der Querschnitt des Messkanals insgesamt durch die beiden rinnenförmigen Ausnehmungen bei stirnseitig aneinanderliegenden Tragkörpern der Durchflusssensoren gebildet. Damit kann ein Messkanal mit geringstem Querschnitt in einfacher Weise mit Hilfe eines Form- oder Scheibenfräsers massgenau hergestellt werden. Die Querschnittskontur der Rinne kann hierbei kreisbogenförmig, aber auch eckig sein, beispielsweise rechteckig, so dass der Gesamtquerschnitt des aus beiden rinnenförmigen Ausnehmungen gebildeten Messkanals dann quadratisch ist. Aber auch trapezförmige Querschnittsformen sind möglich. Das erfindungsgemässe System ist auch dann anwendbar, wenn die beiden Tragkörper nicht dicht aneinanderliegen, so dass ein Teil der Wandungen des Messkanals durch ein Gehäuse gebildet wird.

Eine bevorzugte Ausgestaltung dieser Weiterbildung der Erfindung ist dadurch gekennzeichnet, dass ein Gehäuse mit zwei sich in einer Ebene kreuzenden Bohrungen vorgesehen ist, bei dem in der ersten Bohrung die beiden Tragkörper abgedichtet eingesetzt sind und die zweite Bohrung mit einer Zu- und Ableitung für das zu messende Medium verbunden ist. Hierdurch ist die Möglichkeit gegeben, den Strömungskanal als festes Bauteil auszubilden, da die Zuund Ableitungen zum Messkanal fest mit dem Gehäuse verbindbar sind. Die Durchflusssensoren können dann in die andere Bohrung eingeschoben werden, so dass diese Bauteile im Falle einer Störung einfach auswechselbar sind.

Dadurch, dass die Polflächen der Polschuhe vom Inneren des Tragkörpers her jeweils gegen die Seitenwandungen der rinnenförmigen Ausnehmung gerichtet sind, hat man den Vorteil, dass eine optimale Ausrichtung des Verlaufs der Feldlinien im Bereich der rinnenförmigen Ausnehmung erzielt werden kann, so dass sich beispielsweise bei einer rinnenförmigen Ausnehmung mit rechteckigem Querschnitt ein praktisch geradliniger Feldlinienverlauf senkrecht zur Ausrichtung der Messelektrode und sich damit praktisch ein homogenes Magnetfeld im Messkanal ergibt.

In einer weiteren Ausgestaltung, die dadurch gekennzeichnet ist, dass wenigstens ein Elektromagnet zur Justierung des Feldes axial verschiebbar einstellbar in seinem Tragkörper gehalten ist, sind Durchflussmesser möglich, bei denen durch die Zuordnung von rinnenförmiger Ausnehmung einerseits und stegförmigem Vorsprung andererseits der Kanalquerschnitt einstellbar ist. Durch die axiale Verschiebbarkeit des Elektromagneten innerhalb des einen Tragkörpers kann die Ausrichtung des Magnetfeldes, aber auch die Stärke des das zu messende Medium durchsetzenden Magnetfeldes genau justiert werden.

In einer zweckmässigen Ausgestaltung ist vorgesehen, dass jeweils die Verbindungsleitung zwischen der Messelektrode und der Messumformerschaltung im Bereich des zugeordneten Magneten mittig zwischen den beiden Schenkeln durch eine magnetisch neutrale Zone geführt ist. Dadurch, dass die Verbindungsleitung von der Messelektrode zur Messumformerschaltung durch eine neutrale Phase des Magneten hindurchgeführt wird, kann eine Störung aufgrund des pulsierenden oder wechselnden Magnetfeldes auf das Messergebnis ausgeschlossen werden.

Die Erfindung wird anhand schematischer Zeichnungen von Ausführungsbeispielen näher erläutert. Es zeigen:

Fig. 1 einen Querschnitt durch einen magnetischinduktiven Durchflussmesser mit als Durchflusssensoren ausgebildeten Elektrodenanordnungen,

Fig. 2 eine weitere Ausführungsform,

Fig. 3 eine Ausführungsform eines Durchflusssensors mit einer als Kontaktelektrode ausgebildeten Messelektrode,

Fig. 4 eine Ausführungsform eines Durchflusssensors mit einer als kapazitiv wirkende Elektrode ausgebildeten Messelektrode,

Fig. 5 einen Querschnitt durch einen magnetischinduktiven Durchflussmesser in grösserem Massstab,

Fig. 6 einen Horizontalschnitt gemäss der Linie VI-VI in Fig. 5,

Fig. 7 einen Querschnitt durch eine andere Ausführungsform für etwas grössere Kanalquerschnitte,

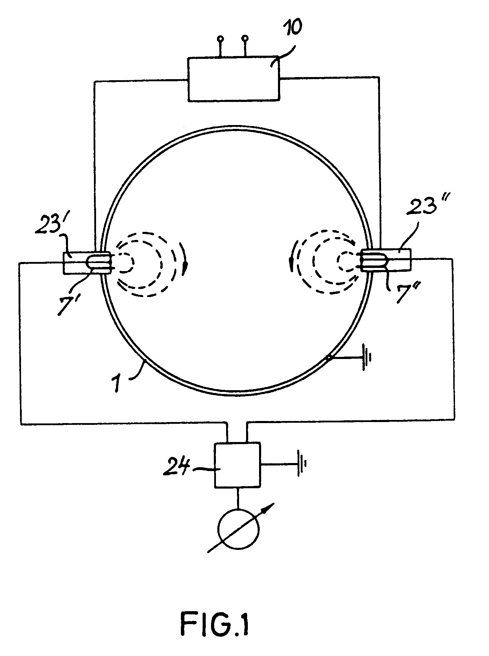

In Fig. 1 ist ein mit Durchflusssensoren aufgebauter magnetisch-induktiver Durchflussmesser schematisch als Schnitt durch einen Strömungskanal 1 dargestellt. Hierbei sind in einer Querschnittsebene des Strömungskanals 1 gegenüberliegend zwei Durchflusssensoren 23' und 23" mit der Wandung des Strömungskanals so verbunden, dass jeweils ihre mit der elektrisch isolierenden Abdeckung versehenen Enden bis in das strömende Medium hereinragen, wobei die dem strömenden Medium zugekehrte Fläche der Abdeckung mit der Kanalwandung praktisch fluchtend abschliesst. Der Elektromagnet 7' des Durchflusssensors 23' und der Elektromagnet 7" des zugeordneten Durchflusssensors 23" sind nun durch entsprechenden Anschluss an die mit einer Steuereinrichtung zur Taktung des Stroms oder zur Umschaltung der Stromrichtung versehene Stromversorgung 10' so angeschlossen, dass die Feldlinien der sich aufbauenden Magnetfelder jeweils gleichgerichtet sind, wie dies durch die Pfeile in der Zeichnung angedeutet ist. Die Verbindungsleitungen 16 beider Durchflusssensoren 23' und 23" sind nun in einem Differenzverstärker einer Umformerschaltung 24 zusammengeschaltet, so dass als Signal die Summe der von den beiden Durchflusssensoren jeweils erfassten Messspannungen als Messwert und Mittelwert der Durchflussmenge zur Anzeige gebracht wird. Die symmetrische und möglichst in einer Querschnittsebene des Strömungskanals 1 vorgesehene Anordnung der beiden Durchflusssensoren 23' und 23" hat den Vorteil, dass elektrische Störspannungen, beispielsweise eine 50 Hz Störspannung auskompensiert wird. Da jeder Durchflusssensor für sich eichfähig ist, ergibt sich für einen derart aufgebauten magnetisch-induktiven Durchflussmesser eine Messeinrichtung mit hoher Messgenauigkeit. Hierbei ist es wegen der kompakten Bauweise des Durchflusssensors möglich, Elektromagneten mit hoher magnetischer Leistung einzusetzen. Da die Spule des Elektromagneten von aussen frei zugänglich ist, besteht darüber hinaus auch die Möglichkeit, für die Spulen eine Zwangskühlung vorzusehen. Der Aufbau eines Durchflusssensors wird unten beschrieben werden. Die bei dem Durchflussmesser gemäss Fig. 1 dargestellte Zuordnung der Messelektroden der Durchflusssensoren zueinander entspricht der herkömmlichen Elektrodenanordnung, wie sie bei Durchflussmessern nach dem Stand der Technik durch die Lage der Magnetpole vorgegeben ist. Dadurch, dass bei einer Bauart mit Durchflusssensoren jede Messelektrode ein « eigenes » Magnetfeld besitzt und damit die Ausrichtung des Feldes in bezug auf die Messelektrode fest vorgegeben ist, ist es auch möglich, die beiden Durchflusssensoren in der Querschnittsebene auch unter einem von 180° abweichenden Winkel zueinander anzuordnen. Hiermit ist die Möglichkeit gegeben, durch eine entsprechende Positionierung der beiden Durchflusssensoren zueinander Einflüsse des Strömungskanals auf das Strömungsprofil durch Schieber, Einmündungen, Krümmer oder dgl. bereits zu berücksichtigen, und so die für die Zuverlässigkeit des Messergebnisses ausschlaggebende mittlere Strömungsgeschwindigkeit exakter zu erfassen.

Da jeder Durchflusssensor hinsichtlich der Zuordnung von Elektrode und Magnetfeld ein « autonomes » System darstellt, ist es auch möglich, mehr als zwei Durchflusssensoren in einen derartigen magnetisch-induktiven Durchflussmesser in einer Querschnittsebene einzubauen. Die Durchflusssensoren können hierbei so geschaltet sein, dass je zwei Sensoren als Gruppe auf einen Messumformer geschaltet werden und damit messtechnisch wie eine Messelektrode wirksam sind. Dies ist deshalb möglich, weil jeder Elektrode ein eigenes Magnetfeld zugeordnet ist und damit gegenseitige Störungen ausgeschlossen sind.

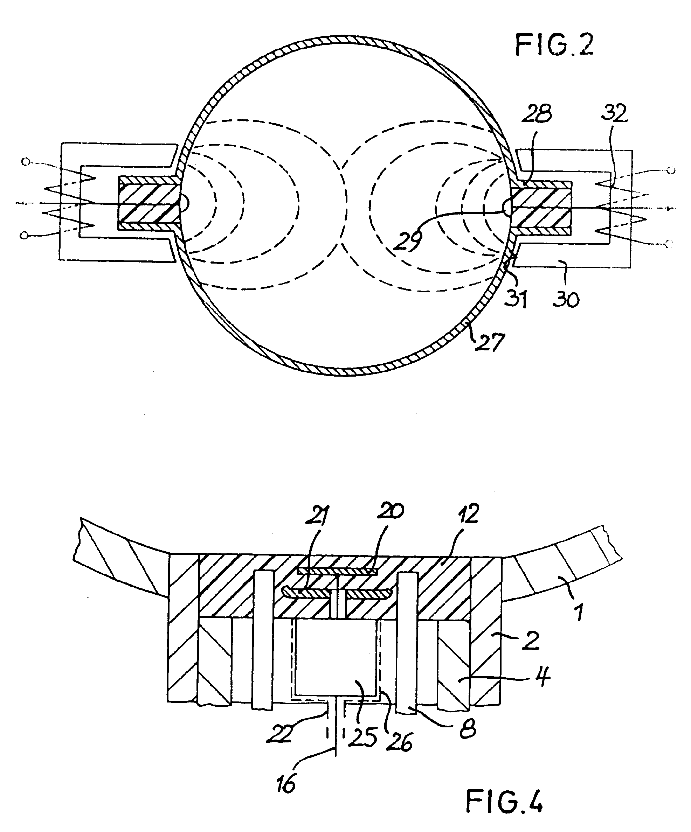

In Fig. 2 ist eine weitere konstruktive Lösung für einen Durchflussmesser dargestellt. Dieser weist ein Rohrstück 27 mit vorgegebener Länge aus einem unmagnetischen Material, beispielsweise aus Kunststoff oder Keramik auf, das in einer Querschnittsebene gegenüberliegend mit zwei nach aussen gerichteten Stutzen 28 versehen ist. Sofern das Rohrmaterial nicht schon von Haus aus aus einem Material hergestellt ist, das elektrisch-isolierend und zugleich gegenüber dem zu messenden Medium widerstandsfähig ist, kann dieses Rohrstück zusätzlich auch noch mit einer entsprechenden Auskleidung versehen sein.

In die Stutzen 28 ist druck- und flüssigkeitsdicht jeweils eine Messelektrode 29 eingesetzt. die entweder als Kontaktelektrode oder aber auch als kapazitiv wirkende Elektrode ausgebildet sein kann. Auf der Aussenseite der beiden Stutzen 28 ist nun jeweils ein U-förmiges Eisenjoch 30 angeordnet, dessen freie Schenkelenden, die die Magnetpole 31 bilden, bis an die Aussenwandung des Rohres 27 herangeführt sind. Das Querjoch ist wiederum mit einer Spule 32 versehen, die in herkömmlicher Weise an eine Stromversorgung angeschlossen ist. Auch hier ist wieder jeder Elektrode 29 durch den aus Eisenjoch 30 und Spule 32 gebildeten Magneten ein « eigenes » Magnetfeld zugeordnet. Da bei dieser Bauform praktisch keine räumlichen Beschränkungen vorgegeben sind, ist es möglich, die Grösse der Magnetspule und damit auch die Ausdehnung des aufzubringenden Feldes in weiten Grenzen zu variieren. Die Form des in den Rohrquerschnitt eindringenden Feldes kann noch dadurch beeinflusst werden, dass die freien Schenkelenden 31 zu Polschuhen verbreitert sind, die die Rohrkontur über einen Teil des Rohrumfanges umfassen. Da hier der Querschnitt des Stutzens 28 nicht durch die Baugrösse des Magneten begrenzt wird, steht praktisch der gesamte Stutzenquerschnitt zur Verfügung, wenn man statt einer Kontaktelektrode, wie hier dargestellt, eine kapazitiv wirkende Elektrode einsetzen will. Die Verwendung kapazitiver Messelektroden bringt immer dann Vorteile, wenn Medien mit geringer elektrischer Leitfähigkeit zu messen sind. Auch hierbei sind die Elektroden elektrisch-isoliert eingesetzt. Hier ist also der Durchflusssensor nur teilweise in den Stutzen eingeschoben, nämlich nur mit seiner Messelektrode, während der zugehörige Magnet diese auf der Aussenseite umgreift. Auch die Bauform kann in einfacher Weise als komaktes, in sich geschlossenes Bauteil ausgebildet sein.

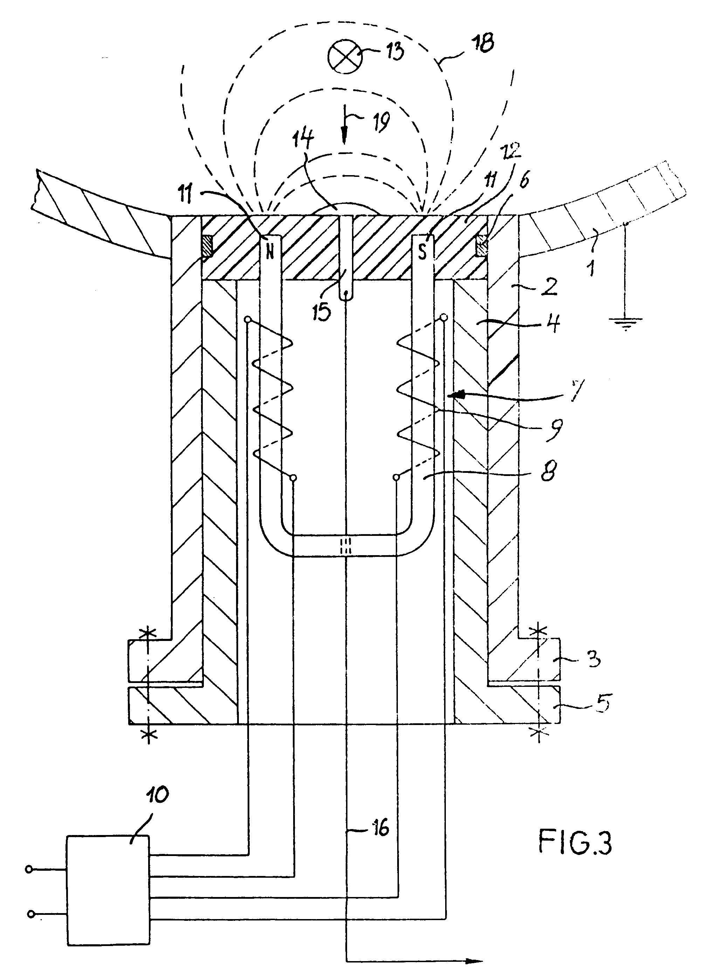

Wie die Schnittdarstellung in Fig. 3 zeigt, ist in die Wandung eines Strömungskanals 1, beispielsweise eines Stahlrohres, ein nach aussen weisender Befestigungsstutzen 2 eingeschweisst. Der Stutzen 2 ist an seinem freien Ende mit einem Flansch 3 versehen. Im Befestigungsstutzen 2 ist ein rohrförmiger Halter 4 für eine Elektrodenanordnung lösbar gehalten, der an seinem aussenliegenden Ende ebenfalls mit einem Flansch 5 versehen ist, der über Schrauben oder dgl. mit dem Flansch 3 fest verbunden werden kann. Der Zwischenraum zwischen dem rohrförmigen Halter 4 und dem Befestigungsstutzen 2 ist zumindest im Durchtrittsbereich des Halters in den Strömungskanal 1 mit einem Dichtelement 6 abgedichtet. Form und/oder Material des Dichtungselementes 6 richtet sich nach den durch das strömende Medium vorgegebenen Betriebsbedingungen, d.h. Druck, Temperatur, chemische Aggressivität usw.

In dem rohrförmigen Halter 4 ist ein Elektromagnet 7 mit einem U-förmigen Eisenjoch 8 befestigt, auf dessen Schenkeln die Spulen 9 so angeordnet sind, dass bei gegebener Richtung eines die Spulen durchfliessenden elektrischen Stromes ein Schenkelende den Nordpol und das andere Schenkelende den Südpol des Magneten bildet. Die Spulen 9 sind in Reihenoder Parallelschaltungen an eine Stromversorgungseinrichtung 10 angeschlossen, so dass mit Hilfe des Elektromagneten 7 ein magnetisches Feld den Strömungskanal 1 durchsetzt.

Die beiden freien, die Pole 11 bildenden Schenkelenden des Eisenjochs 8 sind von einer elektrisch-isolierenden Abdeckung 12 abgedeckt, die das der zu messenden Strömung zugekehrte Ende des Halters 4 dicht abschliesst. Die Strömungsrichtung des Mediums ist durch den senkrecht zur Zeichenebene ausgerichteten Pfeil 13 gekennzeichnet.

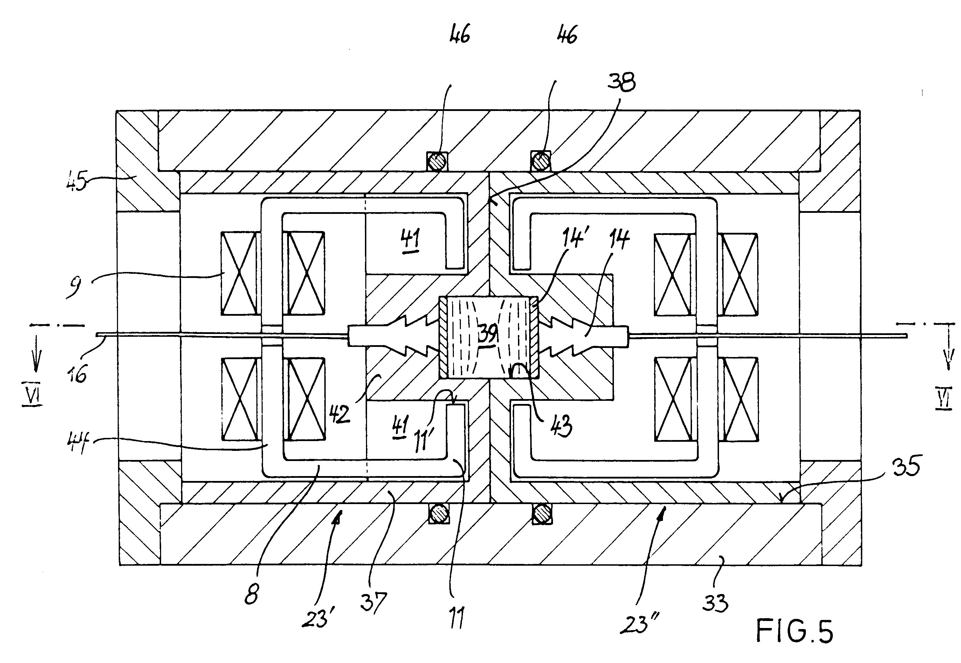

Mittig zu den beiden Polen 11 des Elektromagneten 7 ist eine Messelektrode angeordnet, die bei dem dargestellten Ausführungsbeispiel als Kontaktelektrode 14 ausgebildet ist, d.h. mit dem zu messenden Medium galvanisch leitend in Verbindung steht. Die Kontaktelektrode 14 ist fest mit der Abdeckung 12 verbunden. Ein Kontaktstift 15 ist druck- und flüssigkeitsfest durch die Abdeckung 12 hindurchgeführt. An den Kontaktstift 15 ist eine Verbindungsleitung 16 angeschlossen, die parallel und in gleichem Abstand zu den Schenkeln 8 des Elektromagneten axial durch den Halter 4 nach hinten herausgeführt ist und die mit einem Messumformer zum Empfang des Messsignals verbunden ist. Durch den gleichen Abstand zu beiden Magnetspulen und ggf. durch eine zusätzliche, hier nicht näher dargestellte Abschirmung, ist die Verbindungsleitung schon aufgrund der geometrischen Anordnung gegenüber Störeinflüssen, die von dem Magnetfeld, dass sowohl als Gleichfeld wie auch als Wechselfeld betrieben werden kann, unempfindlich. Anstelle einer Aufteilung der Spule 9 auf die beiden Schenkel des Eisenjochs 8 kann diese auch als Flachspule auf dem Quersteg des Eisenjochs 8 angeordnet sein. Hierdurch lässt sich bei gegebenem Durchmesser des rohrförmigen Halters 4 ein grösserer Abstand zwischen den beiden Polen 11 erzielen. Dies ist insbesondere für die Ausführungsform gemäss Fig. 4 von Bedeutung, da dort die zur Verfügung stehende Elektrodenfläche unmittelbaren Einfluss auf die (elektrische) Leistungsfähigkeit des Durchflusssensors hat. Bei einer Flachspule muss lediglich für eine abgeschirmte Durchführung der Messleitung 16 Sorge getragen werden.

Werden nun die Spulen 9 des Elektromagneten 7 mit einem elektrischen Strom beaufschlagt, so bildet sich während der Einschaltzeit des Stromes zwischen den beiden Polen 11 ein Magnetfeld aus, das das im Strömungskanal 1 strömende Medium durchsetzt und dessen gestrichelt dargestellte Feldlinien 18 in etwa den dargestellten Verlauf aufweisen. Bei gegebener Polarität des Feldes, gegebener Durchflussrichtung des elektrisch-leitfähigen Mediums (Pfeil 13) ergibt sich eine zur Strömungsgeschwindigkeit proportionale Spannung (Pfeil 19), die über die Kontaktelektrode 14 abgegriffen werden kann. Damit kann bei entsprechender Normierung auch die Durchflussmenge pro Zeiteinheit angegeben werden. Der Umformer ist in Fig. 1 schematisch dargestellt.

In Fig. 4 ist schematisch eine andere Ausgestaltung für die Messelektrode dargestellt. Da der Aufbau der Elektrodenanordnung insgesamt dem anhand von Fig. 3 beschriebenen Aufbau entspricht, beschränkt sich die Darstellung in Fig. 4 lediglich auf den Bereich der isolierenden Abdeckung 12. Bei dieser Ausführungsform sind die die Polflächen 11 bildenden freien Schenkelenden des Eisenjochs 8 des Elektromagneten wiederum von der isolierenden Abdeckung 12 abgedeckt. Die Elektrode 20 ist bei dieser Ausführungsform in der Isolierabdeckung 12 von dem strömenden Medium galvanisch getrennt angeordnet und bildet somit eine kapazitiv wirkende Elektrode. Die Versorgungsleitung 16 ist wieder mittig und symmetrisch zu den Schenkeln des Elektromagneten innerhalb des Halters 4 geführt. Zur Reduzierung von Störeinflüssen ist der Elektrode 20 auf ihrer dem strömenden Medium abgekehrten Seite eine Schirmelektrode 21 zugeordnet, die mit der Abschirmung 22 der Verbindungsleitung 16 verbunden ist. Die Verbindungsleitung 16 und die Abschirmung 22 sind an eine für diese Messelektrodenbauform ausgelegte Messschaltung üblicher Bauart angeschlossen. Die Funktionsweise einer derart aufgebauten Elektrodenanordnung entspricht im wesentlichen der anhand von Fig. 1 beschriebenen Funktionsweise. Da jedoch die Elektrode 20 vom strömenden Medium galvanisch getrennt ist, bewirkt das zwischen den beiden Polflächen entstehende Magnetfeld in Verbindung mit dem strömenden Medium einen Verschiebestrom und damit eine Ladung an der isoliert eingebetteten Elektrode. Die Ladung ist bei vorgegebenen Grössen, d.h. Stärke des Magnetfeldes, Geschwindigkeit und Leitfähigkeit des strömenden Mediums sowie der Grösse der Elektrode 20 wiederum geschwindigkeitsproportional, so dass bei entsprechender Taktung des Magnetfeldes und entsprechendem Aufbau des Messumformers wiederum ein der Strömungsgeschwindigkeit proportionales Signal erzeugt werden kann.

In der Zeichnung ist ein weiterer wesentlicher Vorteil eines derartigen Durchflusssensors dargestellt, der insbesondere bei der Verwendung kapazitiver Messelektroden von Bedeutung ist. Bei der dargestellten Bauform ist es möglich, wenigstens einen Teil der Messumformerschaltung, hier einen Impedanzwandler 25, in unmittelbarer Nähe der Elektrode 20 anzuordnen, so dass nur ein kurzes Stück der Vebindungsleitung 16 zwischen der Elektrode 20 und dem Impedanzwandler verbleibt und damit elektrische Störungen weitgehend ausgeschaltet werden. Je nach Art der verwendeten Messumformerschaltung kann zusätzlich zu dem Impedanzwandler auch noch ein Eingangsverstärker an dieser Stelle angeordnet sein. Bei entsprechender Miniaturisierung der Schaltungselemente einerseits und bei entsprechender Baugrösse des Durchflusssensors andererseits ist es ferner möglich, auch die Messumformerschaltung selbst in den Durchflusssensor zu integrieren. Die Schaltungsanordnung 25 ist zweckmässigerweise mit einer Abschirmung 26 versehen.

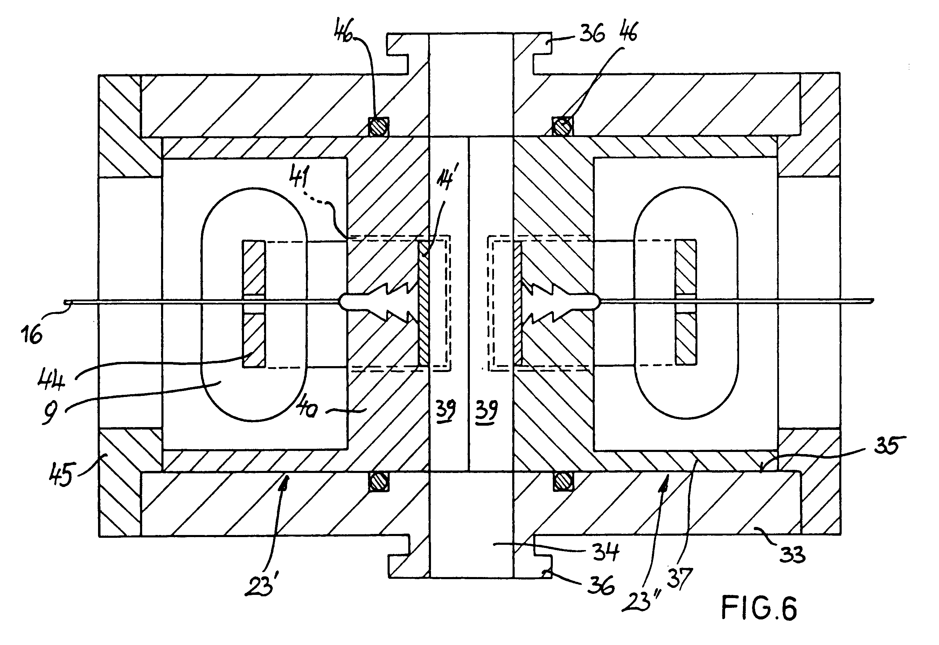

Die in Fig. 5 und 6 dargestellte Ausführungsform weist ein Gehäuse 33 auf, das mit zwei sich in einer Ebene kreuzenden Bohrungen 34 und 35 (Fig. 6) versehen ist. An die Bohrung 34 ist an beiden Enden an der Aussenseite eine Anschlussarmatur 36 für den Anschluss einer Zu- und einer Ableitung für das strömende Medium vorgesehen.

Die Bohrung 35 weist einen wesentlich grösseren Durchmesser auf und dient der Aufnahme von zwei Durchflusssensoren 23', 23". Diese Durchflusssensoren weisen einen zylindrischen Tragkörper 37 aus einem elektrisch nicht leitenden Material auf, der an einer Stirnseite 38 mit einer rinnenförmigen Ausnehmung 39 versehen ist. Die beiden Tragkörper 37 werden nun in die Bohrung 35 von beiden Seiten in das Gehäuse eingeschoben, so dass sie mit ihren Stirnflächen 38 dicht aneinanderliegen und die rinnenförmigen Ausnehmungen 39 zusammen einen Messkanal mit quadratischem Querschnitt bilden, der sich nach beiden Seiten hin an die Durchgangsbohrung 34 anschliesst.

Der zylindrische Tragkörper weist nun im Bereich der rinnenförmigen Ausnehmung 39 eine massive Bodenplatte 40 auf, in die zwei im wesentlichen rechteckige Taschen 41 auf der Innenseite eingearbeitet sind. In den zwischen den beiden Taschen 41 verbleibenden Mittelsteg 42 ist nun eine Messelektrode 14 eingedrückt, deren Kopfteil 14' den Boden der rinnenförmigen Ausnehmung 39 bildet und deren anderes Ende über eine Verbindungsleitung 16 die axial herausgeführt ist, mit der hier nicht näher dargestellten Messumformerschaltung verbunden ist. Die Messelektrode ist formschlüssig und flüssigkeitsdicht im Steg 41 verankert.

In den Innenraum des Tragkörpers 37 ist das C-förmig gebogene Eisenjoch 8 eines Elektromagneten in der Weise eingesetzt, dass die Polschuhe 11 in den Taschen 41 gehalten sind, so dass die Polflächen 11' der Polschuhe 11 von innen her gegen die Seitenwandungen 43 der rinnenförmigen Ausnehmung gerichtet sind. Um den Steg 44 des Eisenjochs ist die Spule 9 gewickelt, die im vorliegenden Fall geteilt ist um die Durchführung der Verbindungsleitung 16 die als abgeschirmte Leitung ausgebildet ist, zu ermöglichen.

Wie aus der Zeichnung ersichtlich liegen die beiden Durchflusssensoren 23', 23" mit ihren Stirnseiten 38 dicht aneinander und sind durch entsprechende Pressstücke 45 im Gehäuse gehalten. Der Spalt zwischen dem Tragkörper 37 und der Innenwandung der Bohrung 35 ist über entsprechende Dichtungen, beispielsweise ein O-Ring 46 druck- und flüssigkeitsdicht abgedichtet.

Wird die Spule 9 nunmehr an eine Stromquelle angeschlossen, wobei die Spulen beider Durchflusssensoren 23', 23" so geschaltet sind, dass die sich stirnseitig gegenüberliegenden Pole beider Durchflusssensoren jeweils gleichnaming sind, so ergibt sich aufgrund der geometrischen Zuordnung der Polflächen 11' zum Strömungskanal praktisch über den ganzen Kanalquerschnitt ein inhomogener Feldlinienverlauf, wie er in Fig. 5 angedeutet ist.

Aus Fig. 5 ist ferner ersichtlich, dass mit einer Basisgrösse für einen derartigen Durchflusssensor nach Art eines Baukastensystems mit nur wenigen Einzelteilen Durchflussmessgeräte für praktisch jeden beliebigen Kanalquerschnitt innerhalb eines Grössenbereichs hergestellt werden können. So lassen sich mit einer Magnetgrösse und einer Grösse für den Tragkörper nur durch unterschiedliche Ausfräsung der rinnenförmigen Ausnehmung 39 und entsprechend schmal bemessene, den Rinnenboden bildende Messelektroden 14 auch kleinere Kanalquerschnitte als die dargestellte Kanalquerschnittform herstellen. Alle übrigen Teile wie Gehäuse, Magneten usw. können unverändert bleiben.

Lediglich die Bohrung für den Strömungskanal 34 muss in ihrer Grösse entsprechend angepasst werden oder aber es werden entsprechend dimensionierte Einsatzrohre zur Verminderung des Strömungsquerschnittes eingesetzt. Das Gehäuse 33 wird aus einem korrosionsbeständigen Metall hergestellt, beispielsweise aus V2A, während die Tragkörper 37 aus einem elektrisch nicht leitenden und ebenfalls korrosionsbeständigen Material hergestellt sind, beispielsweise PTFE.

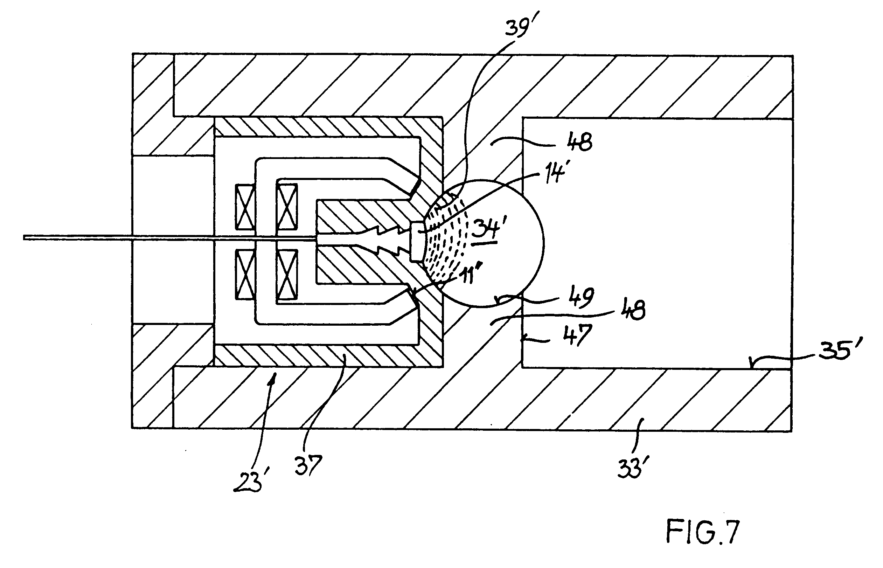

In Fig. 7 ist in einem Schnitt entsprechend dem Schnitt gemäss Fig. 5 eine etwas andere Ausführungsform dargestellt, die es erlaubt, statt eines Messkanals mit eckigem Querschnitt einen Messkanal mit rundem Querschnitt vorzusehen. Bei dieser Ausführungsform ist das Gehäuse 33' mit einer Bohrung 34' versehen, die wiederum als Strömungskanal dient. Die quer hierzu verlaufenden Bohrungen 35' zur Aufnahme der Durchflusssensoren 23' (hier ist nur ein Durchflusssensor dargestellt) sind hier nicht als durchgehende Bohrungen, sondern als Sacklöcher ausgebildet, deren Boden 47 durch die Bohrung 34' angeschnitten wird, so dass hier ein Schlitz entsteht. Die Bohrungen 35' sind somit durch zwei Reststege 48 des Gehäuses getrennt.

Dementsprechend ist die rinnenförmige Ausnehmung 39' im Tragkörper 37 der Durchflusssensoren im Querschnitt als Teil eines Kreises ausgeführt, so dass die Wandungen des Messkanals 34' teilweise durch die entsprechenden Begrenzungen 49 der Stege 48 und durch die Fläche der rinnenförmigen Ausnehmungen 39' gebildet werden. Im Bodenbereich der rinnenförmigen Ausnehmungen 39' ist wieder das Kopfteil der Messelektrode 14 einer im Tragkörper 37 dicht eingepresst angeordnet.

Die Polflächen 11" der Polschuhe 11 des zugehörigen mit einer Wicklung 9 versehenen Magneten sind nun so ausgerichtet, dass sie in etwa parallel zu dem zugehörigen Wandungsteil der rinnenförmigen Aus-. nehmung 39' verlaufen, so dass sich der in Fig. 7 angedeutete Feldlinienverlauf ergibt. Bei den hier in Frage stehenden Abmessungen des Strömungsquerschnittes ist für die Qualität des Messergebnisses die aus der Geometrie der Polschuhe sich ergebende Homogenität des Feldlinienverlaufs vernachlässigbar gering, da aufgrund der doppelseitigen Anordnung der Magneten hier eine entsprechende Beeinflussung durch den gegenüberliegenden Magnetpol erreicht wird, so dass sich der dargestellte verzerrte Feldlinienverlauf ergibt und in dem für die Erzeugung der Messspannung entscheidenden Bereich praktisch ein homogenes Gleichfeld vorhanden ist.

## Patentansprüche

1. magnetisch-induktiver Durchflussmesser mit zwei Elektromagneten (7) zur Erzeugung eines magnetischen Feldes, das ein in einem Rohr (1) strömendes elektrisch-leitfähiges Medium in einer Querschnittsebene durchsetzt und in dem un der Querschnittsebene mit zwei Messelektroden (14; 14'; 20; 29) angeordnet sind, die an die Eingänge eines Differenzverstärkers als Teil einer Messumformerschaltung (24) angeschlossen und die an in etwa einander gegenüberliegenden Seiten des Rohres (1) angeordnet sind, dadurch gekennzeichnet, dass jeder Elektromagnet (7) mit seinen beiden, mit einer elektrisch isolierenden Abdeckung (12) versehenen Polen (11) dem strömenden Medium zugekehrt ist und jeweils eine Messelektrode (14; 14'; 20; 29) mittig zwischen den beiden Polen (11) des jeweiligen Elektromagneten (7) angeordnet ist, so daß sein magnetfeld den Wertigkeitsbereich dieser Messelektrode deckt.

2. Durchflussmesser nach Anspruch 1, dadurch gekennzeichnet, dass die Messelektrode jeweils als Kontaktelektrode (14; 14'; 29) auf der Aussenfläche der isolierabdeckung (12) angeordnet ist.

3. Durchflussmesser nach Anspruch 1, dadurch gekennzeichnet, dass die Messelektrode (20) jeweils in der Isolierabdeckung (12) von dem strömenden Medium galvanisch getrennt angeordnet ist.

4. Durchflussmesser nach Anspruch 3, dadurch gekennzeichnet, dass der Messelektrode (20) jeweils auf ihrer dem strömenden Medium abgekehrten Seite eine Schirmelektrode (21) zugeordnet ist.

5. Durchflussmesser nach einem der Ansprüche 1 bis 4, dadurch gekennzeichnet, dass jeweils die Verbindungsleitung (16) zwischen der Messelektrode (14) und der Messumformerschaltung im Bereich des zugeordneten Elektromagneten (7) mittig zwischen den beiden Schenkeln durch eine magnetisch neutrale Zone geführt ist.

6. Durchflussmesser nach einem der Ansprüche 1 bis 5 dadurch gekennzeichnet, dass jeweils die Polschuhe (11) des Elektromagneten (7) und die Messelektrode (14) zumindest in ihrem dem zu messenden Medium zugekehrten Bereich in einem Tragkörper (37) aus elektrisch nicht leitendem Material eingebettet sind und einen Durchflusssensor bilden, dass wenigstens die dem strömenden Medium zugekehrte Stirnseite (38) des Tragkörpers (37), der mit einem Elekromagneten versehen ist, eine rinnenförmige Ausnehmung (39) aufweist, die parallel zwischen den Polschuben (11) des Elektromagneten verläuft und in deren Grund die Messelektrode (14) liegt, und dass ein zweiter Tragkörper (37') diametral gegenüberliegend angeordnet ist, und dass beide Tragkörper (37, 37') im Bereich der rinnenförmigen Ausnehmung zumindest einen wesentlichen Teil des Wandungsumfanges des Messkanals bilden.

7. Durchflussmesser nach Anspruch 1 bis 6, gekennzeichnet durch ein Gehäuse (33) mit zwei sich in einer Ebene kreuzenden Bohrungen (34, 35), wobei in der ersten Bohrung (35) die beiden Tragkörper (37, 37') abgedichtet eingesetzt sind und die zweite Bohrung (34) mit einer Zu- und Ableitung für das zumessende Medium verbunden ist.

8.Durchflussmesser nach Anspruch 6 oder 7, dadurch gekennzeichnet, dass die Polflächen (11') der Polschuhe (11) vom Inneren des Tragkörpers (37) her jeweils gegen die Seitenwandungen der rinnenförmigen Ausnehmung (39) gerichtet sind.

9. Durchflussmesser nach einem der Ansprüche 6 bis 8, dadurch gekennzeichnet, dass die rinnenförmige Ausnehmung (39) einen in etwa rechteckigen Querschnitt aufweist.

10. Durchflussmesser nach einem der Ansprüche 1 bis 9, dadurch gekennzeichnet, dass wenigstens ein Elektromagnet (7) zur Justierung des Feldes axial verschieb- und einstellbar in seinem Tragkörper (6, 37) gehalten ist.

## Claims

1. Magnetically inductive flow meter with two electromagnets (7) for producing a magnetic field, which penetrates an electrically conductive medium flowing in a pipe (1) in a plane of cross-section and in which in the plane of cross-section only two measuring electrodes (14; 14'; 20; 29) are arranged which are connected to the inputs of a differential amplifier as part of a measuring transformer circuit (24), and which are mounted on sides of the pipe (1) approximately opposite each other, characterised in that each of the electromagnets (7) with its two poles (11) provided with an electrically insulating covering (12) is facing the flowing medium and one of the measuring electrodes (14; 14'; 20) is arranged centrally between the two poles (11) of the electromagnet (7) in consequence thereof the magnetic field covers the valency range of this measuring electrode.

2. Flow meter according to Claim 1, characterised in that the measuring electrode is arranged respectively as a contact electrode (14) on the outer surface of the insulating covering (12).

3. Flow meter according to Claim 1, characterised in that the measuring electrode (20) is arranged respectively in the insulating covering (12) of the flowing medium so as to be galvanically separate.

4. Flow meter according to Claim 3, characterised in that a shield grid (21) is assigned to each measuring electrode (20) on its side facing away from the flowing medium.

5. Flow meter according to one of Claims 1 to 4, characterised in that each time the connecting tube (16) between the measuring electrode (14) and the measuring transformer circuit in the area of the electromagnet (7) assigned is guided centrally between the two branches through a magnetically neutral zone.

6. Flow meter according to one of Claims 1 to 5, characterised in that each time the pole shoe (11) of the electromagnet (7) and the measuring electrode (14), at least in their area facing the medium to be measured, are embedded in a supporting casing (37) of electrically non-conductive material and from a flow sensor, in that at least the face (38) of the supporting casing (37) facing the flowing medium, which is provided with an electromagnet, has a groove-shaped recess (39) which runs parallel between the pole shoes (11) of the electromagnet and in the base of which lies the measuring electrode (14), and that a second supporting casing (37') is arranged diametrically opposite and in that both supporting casings (37, 37') in the area of the groove-shaped recess form at least a major part of the wall perimeter of the measuring flume.

7. Flow meter according to Claim 1 to 6, characterised by a housing (33) with two boreholes (34, 35) crossing in one plane, the two supporting casings (37,37') being inserted hermetically in the first borehole (35) and the second borehole (34) being connected to a delivery and outlet pipe for the medium to be measured.

8. Flow meter according to Claim 6 or 7, characterised in that the pole faces (11') of the pole shoes (11) are aligned respectively against the side walls of the groove-shaped recess (39) from the interior of, the supporting casing (37).

9. Flow meter according to one of Claims 6 to 8, characterised in that the groove-shaped recess (39) has an approximately rectangular cross-section.

10. Flow meter according to one of Claims 1 to 9, characterised in that at least one electromagnet (7) for adjusting the field is supported in its supporting casing (6, 37) so as to be axially movable and adjustable.


## Revendications

1. Débitmètre magnéto-inductif comportant deux électro-aimants(7) pour produire un champ magnétique qui traverse, dans un plan de coupe, un fluide électriquement conducteur qui s'écoule dans un tube (1) et dans lequel sont disposées dans le plan de coupe, seulement deux électrodes de mesure (14, 14'; 20; 29) qui sont reliées aux entrées d'un amplificateur différentiel comme faisant partie d'un circuit transducteur de mesure (24) et qui sont disposées sur les côtés, se faisant à peu près face l'un à l'autre, du tube (1), caractérisé en ce que chaque électro-aimant (7) est orienté vers le fluide, qui s'écoule, par ses deux pôles (11) munis d'un couvercle (12) électriquement isolant; et en ce que chaque electrode de mesure (14; 14'; 20) est disposée au milieu entre les deux pôles (11) de l'électro-aimant (7) pour que le champ magnétique couvre la zone de valorisation de cette électrode de mesure.

2. Débitmètre selon la revendication 1, caractérisé en ce que l'électrode de mesure est respectivement disposée, sous forme d'électrode de contact (14), sur la surface extérieure du couvercle isolant (12).

3. Débitmètre selon la revendication 1, caractérisé en ce que l'électrode de mesure (20) est respectivement disposée dans le couvercle isolant (12), séparée galvaniquement du fluide qui s'écoule.

4. Débitmètre selon la revendication 3, caractérisé en ce qu'à l'électrode de mesure (20) correspond respectivement, sur son côté opposé au fluide qui s'écoule, une électrode-écran (21).

5. Débitmètre selon l'une des revendications 1 à 4, caractérisé en ce que, respectivement, la conduite de liaison (16) entre l'électrode de mesure (14) et le circuit du transducteur de mesure passe, dans la zone de l'électro-aimant (7) correspondant, au milieu entre les deux ailes, à travers une zone magnétiquement neutre.

6. Débitmètre selon l'une des revendications 1 à 5, caractérisé en ce que respectivement l'épanouissement polaire (11) de l'électro-aimant (7) et l'électrode de mesure (14) sont logés, au moins en ce qui concerne leur zone orientée vers le fluide à mesurer, dans une enveloppe porteuse (37) en matériau électriquement non conducteur et forment un détecteur de débit; en ce qu'au moins la face frontale (38), orientée vers le fluide qui s'écoule, de l'enveloppe porteuse (37), qui est munie d'un électro-aimant, présente un évidement (39) en forme de rigole qui court parallèlement entre les épanouissements polaires (11) de l'électro-aimant et dans le fond duquel se trouve l'électrode de mesure (14); et en ce qu'une seconde enveloppe porteuse (37') est disposée diamétralement opposée; et en ce que les deux enveloppes porteuses (37, 37') forment dans la zone de l'évidement en forme de rigole au moins une partie essentielle de la paroi périphérique du canal de mesure.

7. Débirmètre selon les revendications 1 à 6, caractérisé par un carter (33) qui présente deux alésages (34, 35) qui se croisent dans un plan, étant précisé que dans le premier alésage (35) sont insértées, avec étanchéité, les deux enveloppes porteuses (37, 37') et que le second alésage (34) est relié avec une conduite d'arrivée et une conduite de départ pour le fluide à mesurer.

8. Débitmètre selon la revendication 6 ou 7, caractérisé en ce que les surfaces polaires (11') de l'épanouissement polaire (11) sont dirigées, depuis l'intérieur de l'enveloppe porteuse (37), respectivement vers les parois latérales de l'évidement (39) en forme de rigole.

9. Débitmètre selon l'une des revendications 6 à 8, caractérisé en ce que l'évidement en forme de rigole (39) présente une section à peu près rectangulaire.

10. Débitmètre selon l'une des revendications 1 à 9, caractérisé en ce qu'au moins un électro-aimant (7) prévu pour l'ajustement du champ est maintenu avec possibilité du coulissement et de réglage axial dans son enveloppe porteuse (6, 37).

FIG.1

FIG.2

FIG.4

FIG.3

FIG.5

FIG.6

EP 0 179 285 B2

FIG.7

EP 0 179 285 B2